Europäisches Patentamt

**European Patent Office**

Office européen des brevets

(11) Veröffentlichungsnummer: **0 031 595**
**B1**

(12) **EUROPÄISCHE PATENTSCHRIFT**

(45) Veröffentlichungstag der Patentschrift:
**29.08.84**

(21) Anmeldenummer: **80108234.8**

(22) Anmeldetag: **29.12.80**

(51) Int. Cl.³: **F 16 M 11/10, F 16 F 15/06**

(54) Vorrichtung zum Ausgleich von Drehmomenten.

(30) Priorität: **28.12.79 DE 2952660**
**28.12.79 DE 7936705 U**

(43) Veröffentlichungstag der Anmeldung:
**08.07.81 Patentblatt 81/27**

(45) Bekanntmachung des Hinweises auf die Patenterteilung:
**29.08.84 Patentblatt 84/35**

(84) Benannte Vertragsstaaten:
**AT BE CH DE FR GB IT LI LU NL SE**

(56) Entgegenhaltungen:
**DE - A - 1 548 520**
**DE - A - 2 457 935**
**DE - A - 2 623 929**
**DE - B - 2 717 772**
**DE - U - 7 415 127**

(73) Patentinhaber: **GfB Gesellschaft für Betriebsberatung mbH, Orionstrasse 6, D-8044 Unterschleissheim (DE)**

(72) Erfinder: **Pallas, Iva, Dom-Pedro-Strasse 15, D-8000 München 19 (DE)**

(74) Vertreter: **Zmyj, Erwin, Dipl.-Ing., Postfach 95 04 28, D-8000 München 95 (DE)**

## Beschreibung

Die Erfindung betrifft eine Vorrichtung zum Ausgleich von Drehmomenten, die beim Kippen eines um eine feste Drehachse schwenkbar gelagerten Körpers entstehen, mit einem Statorteil mit einem den Körper bildenden oder aufnehmenden Rotorteils, wobei der Statorteil und der Rotorteil über die feste Drehachse gegeneinander verschwenkbar verbunden sind und zumindest eine zwischen Statorteil und Rotorteil wirkende Feder eine dem Drehmoment entgegengerichtete Rückstellkraft ausübt.

Eine derartige Vorrichtung zum Ausgleich von Drehmomenten ist aus der DE-C-2 717 772 bekannt. Das Rückstellmoment wird durch eine Reihe von bandförmigen Gummischlaufen geliefert, die miteinander verbunden sind. Die Gummibänder können bezüglich ihrer Ruhelage derart verstellt werden, daß ihre jeweilige Ruhelage mit der Gleichgewichtslage der Kamera auf dem Stativkopf bei losgelöster Ausgleichsvorrichtung zusammenfällt. Durch diese Vorspannung wird die herkömmlicherweise an der Oberseite des Rotors vorgesehene Schiebeplatte ersetzt, längs der eine Kamera solange verschoben wird, bis ihr Schwerpunkt über die Drehachse zu liegen kommt. Entgegen den Ausführungen in der vorgenannten Druckschrift gelingt es jedoch mit dieser bekannten Vorrichtung nicht, eine Rückstellkraft zu erzeugen, die sich mit dem Schwenkwinkel derart ändert, daß das von der Kamera ausgeübte Drehmoment und das von den Gummibändern ausgeübte Rückstellmoment über den gesamten Verstellwinkel jeweils im Gleichgewicht sind, da Gummibänder mit entsprechenden Kennlinien bislang technisch nicht zu realisieren sind. Ein weiterer Nachteil neben der Abhängigkeit der Federkraft vom Neigungswinkel besteht darin, daß die Gummibänder jeweils nur auf ein Kameragewicht abgestimmt sind, und daß bei einem Wechsel auf andere Kameras mit einem anderen Gewicht ein Austausch der Gummibänder notwendig ist.

In dem DE-U-7 415 127 ist ein Stativkopf beschrieben, der für verschiedene Kameratypen verwendbar sein soll. Bei diesem bekannten Stativkopf sind Führungsbolzen fest an dem Stator befestigt. Die Führungsbolzen spreizen sich in Abhängigkeit von der Schwenkstellung an verschiedenen Stellen nierenförmiger Aussparungen ab, die in Seitenteilen des Rotors angebracht sind. Das Gewicht der Kamera wird über die Unterseite des Rotors auf den Stator übertragen, wobei der Unterstützungspunkt beim Neigen des Geräts quer zur Stativachse und quer zur Neigungsachse wandert und zwar in Richtung der Verlagerung des Schwerpunkts. Nachteilig bei dieser Anordnung sind relativ große zu überwindende Reibungskräfte und der Umstand, daß mit diesem Stativkopf nur begrenzte Neigungswinkel von ca. 30° möglich sind. Derartige Quadrantenköpfe werden daher nur in geringem Umfange praktisch eingesetzt.

In der DE-A-2 457 935 ist eine Schwenkbefestigung beschrieben, bei der ein pantographischer Gelenkmechanismus das kippbare Tragglied für die Kamera hält. Es gelingt mit dieser Anordnung, das Gewicht der Kamera bei jeder Schwenklage so abzustützen, daß die Kamera keine unkontrollierten Bewegungen durchführt, wenn sie von der Bedienungsperson losgelassen wird. Die Anordnung ist jedoch schwer einzustellen, teuer in ihrer Herstellung und kompliziert, wobei sie aufgrund ihres großen Gewichtes nur für Studioaufnahmen geeignet ist, jedoch nicht für Dreharbeiten außerhalb des Studios.

Aus der DE-A-1 548 520 ist schließlich eine Gewichtsausgleichvorrichtung für zwei Schwenklagen bekannt.

Der vorliegenden Erfindung liegt daher die Aufgabe zugrunde, eine Vorrichtung zum Ausgleich von Drehmomenten der eingangs beschriebenen Art zu schaffen, die bei einfachem Aufbau und geringem Gewicht kippbar gelagerte Lasten über einen weiten Neigungsbereich stabilisiert, so daß sich in jeder Lage Drehmoment und Rückstellmoment zumindest weitgehend die Waage halten. Diese Aufgabe wird erfindungsgemäß dadurch gelöst, daß die Übertragung des Drehmoments auf die zumindest eine Feder über zumindest einen Hebelarm erfolgt, dessen wirksame Länge und/oder dessen in Auslenkrichtung der Feder wirksame Verschiebungskomponente bei einem Verschwenken des Rotorteiles gegenüber dem Statorteil mit der Änderung des Drehmoments im gleichen Sinne variiert bzw. variieren.

Unter der Bezeichnung Auslenkrichtung wird bei Druckfedern die Kompressions- bei Zugfedern die Dehnungsrichtung verstanden.

Auf diese Weise läßt sich auch bei Federn mit linearen Kennlinien, insbesondere auch bei Federn deren Auslenkrichtung geradlinig verläuft, eine Charakteristik bezüglich des Rückstellmomentes erreichen, die den von dem drehbar gelagerten Körper ausgeübten Drehmoment entgegengerichtet und größenmäßig gleich ist.

Ein völliger Ausgleich zwischen dem von dem zu verschwenkenden Körper um die Drehachse ausgeübten Drehmoment und dem von den Federn erzeugten Rückstellmoment wird dann erreicht, wenn die wirksame Länge der Hebelarme und/oder deren wirksamen Verschiebungskomponente in Auslenkrichtung der zugehörigen Feder bei einem Verschwenken des Rotorteiles gegenüber dem Statorteil derart variieren, daß sich das Rückstelldrehmoment mit dem Cosinus des Schwenkwinkels ändert.

In allen denjenigen Fällen, in denen aus einer Ausgangslage eine Schwenkbewegung im Uhrzeigersinne und eine Schwenkbewegung gegen den Uhrzeigersinn erwünscht ist, die vorzugsweise in jeder Richtung über einen Winkelbereich von 0—90° stattfinden kann, werden zumindest eine Feder und zumindest ein Hebelarm für eine Schwenkbewegung im Uhrzeigersinne und zumindest eine Feder sowie zumindest ein weiterer Hebelarm für eine Schwenkbewegung entgegen dem Uhrzeigersinne vorgesehen. Anstelle je eines Hebelarmes und je einer zugehörigen Feder für die eine und/oder andere Schwenkrichtung können Paare oder Mehrfachanordnungen aus Federn und Hebelarmen verwendet sein.

Wenn mittels der Vorrichtung Körper mit unterschiedlicher Masse verschwenkt werden sollen, beispielsweise Kameras mit unterschiedlichem Gewicht, empfiehlt es sich, einen Verstellmechanismus für die Nullpunkteinstellung der wirksamen Hebellänge vorzusehen. Dieser Verstellmechanismus kann gleichzeitig auch für eine Anpassung der Schwerpunktslage des jeweiligen Körpers dienen, d. h. beispielsweise für derartige Fälle, bei denen die gleiche Kamera mit unterschiedlichen Vorsatz-Objekten verwendet wird, welche den Schwerpunkt verschieben.

Die Bedienung der Vorrichtung gestaltet sich besonders einfach, wenn die beiden Verstellmechanismen gemeinsam betätigbar sind. Dieser Vorteil kommt besonders zum Tragen, wenn Körper schwenkbar gelagert werden sollen, deren Schwerpunkt in der Ausgangslage der Schwenkbewegung jeweils über der Drehachse liegt.

Eine getrennte Betätigbarkeit der beiden Verstellmechanismen empfiehlt sich dagegen in denjenigen Fällen, wenn etwa gleich schwere Körper jedoch mit unterschiedlicher Schwerpunktlage bezüglich des Befestigungspunkts auf der Vorrichtung verschwenkt werden sollen, wie beispielsweise Kameras mit unterschiedlichen Objektiven. Diesen Fällen kann jedoch mit Vorteil auch dadurch Rechnung getragen werden, daß auf dem Rotorteil eine Einstellvorrichtung vorgesehen ist, die ein Verschieben des auf dem Rotorteil befestigten Körpers senkrecht zur Drehachse ermöglicht, bis der Schwerpunkt über dieser liegt.

Bei einer besonders bevorzugten Ausgestaltung der erfindungsgemäßen Vorrichtung stützen sich Rotorteil und Statorteil mittels zumindest eines Auflagepunkts ab, der sich während der Schwenkbewegung auf einer Stirnfläche der Feder verschiebt, während er die Feder zusammendrückt oder entlastet.

Die Anpassung der wirksamen Hebellänge und/oder der wirksamen Verschiebungskomponente in Auslenkrichtung der Feder an das von dem Körper bei den einzelnen Schwenkwinkeln erzeugte Drehmoment läßt sich besonders einfach durchführen, wenn man die Abstützung zwischen Rotorteil und Statorteil über eine entsprechend geformte Nockenfläche durchführt, längs derer sich der Auflagepunkt während der Schwenkbewegung verschiebt. Gemäß einer ersten Ausgestaltung wird dies mit Vorteil dadurch erreicht, daß die Stirnfläche der Feder nockenartig ausgebildet ist. Diese Variante erlaubt eine besonders feine Abstimmung in denjenigen Fällen, bei denen mittels der Vorrichtung lediglich ein Körper mit definierter Masse verschwenkt werden soll. Falls dagegen Körper mit verschiedenen Massen und/oder verschiedenen Schwerpunktlagen mit der gleichen Vorrichtung verschwenkt werden sollen, empfiehlt es sich, die Stirnfläche der Feder eben verlaufen zu lassen und/oder senkrecht zur Auslenkrichtung, so daß eine einfache Verschiebung des Auflagepunkts eine Anpassung an die unterschiedlichen Gewichte oder Schwerpunktslagen ermöglicht.

Eine besonders einfache und zweckmäßige geometrische Anordnung ergibt sich, wenn die zumindest eine Feder senkrecht zur Drehachse und in einem radialen Abstand von dieser verläuft. Mit Vorteil ist die zumindest eine Feder dabei derart angeordnet, daß ihre Auslenkrichtung vertikal verläuft, wenn die Vorrichtung ihre normale Arbeitslage einnimmt. Dies gilt insbesondere für diejenigen Fälle, bei denen die zumindest eine Feder im Statorteil untergebracht ist.

Wenn schwere Körper verschwenkt werden sollen empfiehlt es sich, das Rückstellmoment unter Umständen von mehreren Federn aufbringen zu lassen, wobei die in einer Schwenkrichtung wirksamen Federn zweckmäßigerweise längs einer parallel zur Drehachse und im Abstand von dieser verlaufenden Gerade angeordnet sind.

Als besonders praktisch hat es sich erwiesen, wenn der Rotorteil zwischen zwei durch die Drehachse verbundenen wangenartigen Bereichen des Statorteiles geführt ist.

Die Unterbringung der Federn ist grundsätzlich im Statorteil als auch im Rotorteil möglich. Es sind auch Ausführungsformen denkbar, bei denen ein Teil der Feder im Statorteil, ein anderer Teil im Rotorteil untergebracht ist. Gemäß einer ersten besonders bevorzugten Ausgestaltung sind die Federn im Statorteil aufgenommen. Diese Ausgestaltung hat den Vorteil, daß sich bei einer Schwenkbewegung der Vorrichtung sowohl die wirksamen Längen der Hebelarme, als auch die wirksamen Verschiebungskomponenten in Auslenkrichtung der Feder ändern. Wenn dagegen die Federn gemäß einer zweiten besonders zweckmäßigen Ausgestaltung im Rotorteil aufgenommen sind, ändert sich vorzugsweise allein die wirksame Verschiebungskomponente in Auslenkrichtung der zumindest einen Feder. Diese beiden grundsätzlichen Ausgestaltungen, können wegen der durch die Schwerkraftswirkung festgelegten Bezugsebene nicht als einfache kinematische Umkehr voneinander angesehen werden, sie lassen sich jedoch auch gemeinsam in einer Vorrichtung verwirklichen, wie vorstehend angedeutet wurde.

Der Verstellmechanismus kann sowohl im Rotorteil als auch im Statorteil untergebracht sein und entweder die Federn und/oder den Auflagepunkt auf diesen verschieben. Besonders günstig ist, wenn der Verstellmechanismus im Statorteil, insbesondere in einem der wangenartigen Bereiche aufgenommen ist, da er dort auch bei den unterschiedlichen Schwenkwinkeln des Rotorteils leicht zugänglich und ablesbar ist.

Gemäß einer besonders bevorzugten Ausgestaltung der Erfindung sind als Federn Schraubenfedern vorgesehen, die als Druckfedern in zylindrischen Hülsen aufgenommen sind. Die zylindrischen Hülsen sind zweckmäßigerweise zumindest an dem der Stirnfläche der Federn zugekehrten Ende mit einem seitlichen Schlitz und/oder zumindest an einem ihrer Enden mit einem Dämpfungsglied versehen. Der seitliche Schlitz ermöglicht es, daß die Angriffspunkte der Hebelarme auch bei zunehmender Kompression der Federn von den Hülsen nicht gestört werden. Das Dämpfungsglied verhindert ein Nachvibrieren der Federn nach Durchführung einer Schwenkbewegung, was insbesondere bei einer Verwendung der Vorrichtung zum Verschwenken von Kameras nachteilig ist.

Ein Auswandern der Federn während der Schwenkbewegung und damit eine Veränderung der gewünschten Kennlinie wird dadurch vermieden, daß in die Schraubenfedern Führungsbolzen eingesetzt sind, wobei deren freie Fläche zweckmäßigerweise die nockenartig oder eben ausgebildete Stirnfläche für den Angriff des Auflagepunktes bildet. Insbesondere für eine Verschwenkung von großen Massen empfiehlt es sich zwischen Statorteil und Rotorteil ein Dämpfungsglied vorzusehen. Schwingungen der Federn werden besonders wirksam verhindert, wenn die nockenartig oder eben ausgebildete Stirnfläche über ein Dämpfungsglied mit der jeweiligen Feder in Wirkverbindung steht.

Bei einer besonders einfachen Ausgestaltung der Erfindung ist der zumindest eine Auflagepunkt von dem freien Ende einer Rolle oder eines Bolzens gebildet die bzw. der von dem Rotorteil bzw. von dem Statorteil absteht. Für die Anpassung an die gewünschte Kennlinie des Rückstellmoments ist es besonders günstig, wenn der Bolzen nockenartig ausgeführt ist. Der Bolzen oder die Rolle kann mit Vorteil seitlich von dem Rotorteil bzw. Statorteil parallel zur Drehachse von dieser abstehen.

Eine besonders einfache und wirksame Ausgestaltung des Verstellmechanismus für die Nullpunkteinstellung der wirksamen Hebellänge besteht in der Verwendung einer Verstellschraube, welche den Bolzen oder die Rolle längs einer vorgegebenen Kurve senkrecht zur Drehachse verschiebt. Der Bolzen oder die Rolle sind zweckmäßigerweise in einem Führungsblock gehaltert, der längs einer zylindrischen Bohrung verschiebbar ist, wobei die Verstellschraube mit Vorteil über eine Gewindebohrung in Wirkverbindung mit dem Führungsblock steht.

Bei einer Anordnung, in der die Federn im Statorteil angebracht sind, hat es sich als besonders günstig erwiesen, wenn der Winkel, den der Radiusvektor von der Drehachse zu dem Auflagepunkt des Rotorteiles auf der Stirnfläche der Feder mit einer senkrecht zur Auslenkachse der Feder verlaufenden Fläche einschließt, zwischen etwa 10° bis etwa 80°, vorzugsweise etwa 15° bis 45° beträgt, wenn die Vorrichtung bezüglich der Schwenkbewegung ihre Ruhelage einnimmt. Gemäß der bevorzugten Ausführungsform beträgt der Winkel etwa 36°. Eine Ermüdung der Federn wird wirksam vermieden, wenn diese so eingebaut sind, daß sie in der Ruhelage entspannt sind.

Als günstig hat es sich ferner erwiesen, wenn der zumindest eine Hebelarm und die zugehörige Feder so angeordnet sind, daß die wirksame Länge des Hebelarmes während der Schwenkbewegung ein Maximum durchläuft. Dies entspricht der Zunahme des Drehmoments während der Schwenkbewegung.

Die Federn sind praktischerweise derart eingebaut, daß sie entweder allein auf Druck oder allein auf Zug beansprucht sind.

Weitere Einzelheiten und Vorteile der Erfindung ergeben sich aus der folgenden Beschreibung bevorzugter Ausführungsbeispiele anhand der Zeichnungen.

Fig. 1 zeigt in Seitenansicht als Ausführungsbeispiel für eine Vorrichtung zum Ausgleich von Drehmomenten einen auf einem Stativ befestigten Schwenkkopf mit einer darauf gehalterten Filmkamera.

Fig. 2 zeigt in teilgeschnittener Seitenansicht den Schwenkkopf von Fig. 1, wobei der Schnitt längs der Linie II-II von Fig. 4 erfolgt.

Fig. 3 zeigt eine teilgeschnittene Seitenansicht des Schwenkkopfes von Fig. 1 in Richtung des Pfeiles III-III von Fig. 4.

Fig. 4 zeigt einen Längsschnitt durch den Schwenkkopf längs der Linie IV-IV von Fig. 3.

Fig. 5 zeigt ein erstes Ausführungsbeispiel von einem Verstellmechanismus für die Nullpunkteinstellung der wirksamen Hebellängen, wobei in Fig. 5a ein Schnittparallel zur Drehachse und in Fig. 5b ein Schnitt senkrecht zur Drehachse wiedergegeben ist.

Fig. 6 zeigt eine weitere Ausführungsform eines Verstellmechanismus für die Nullpunkteinstellung der wirksamen Hebellängen in Abhängigkeit von Gewicht und Schwerpunktlage des Körpers, wobei in Fig. 6a ein Schnitt parallel zur Drehachse, in Fig. 5b ein Schnitt senkrecht zur Drehachse wiedergegeben ist.

Fig. 7 zeigt eine teilgeschnittene Seitenansicht von einer Variante des in Fig. 2 gezeigten Schwenkkopfs in einer entgegen dem Uhrzeigersinne verschwenkten Stellung.

Fig. 8 zeigt im Horizontalschnitt eine weitere Ausführungsform eines Schwenkkopfs, bei dem die ein Rückstellmoment bewirkenden Federn im unteren Bereich des Rotorteiles untergebracht sind.

Fig. 9 zeigt in teilgeschnittener Seitenansicht ein weiteres Ausführungsbeispiel eines Schwenkkopfs, bei dem die ein Rückstellmoment ausübenden Federn im oberen Bereich des Rotorteiles untergebracht sind.

Fig. 10 zeigt den Schwenkkopf von Fig. 9 bei einer Verschwenkung in Richtung des Uhrzeigersinnes.

Fig. 11 zeigt in schematischer teilgeschnittener Seitenansicht ein weiteres Ausführungsbeispiel eines Schwenkkopfs, bei dem anstelle von Druckfedern in dem Statorteil untergebrachte Zugfedern das Rückstellmoment liefern.

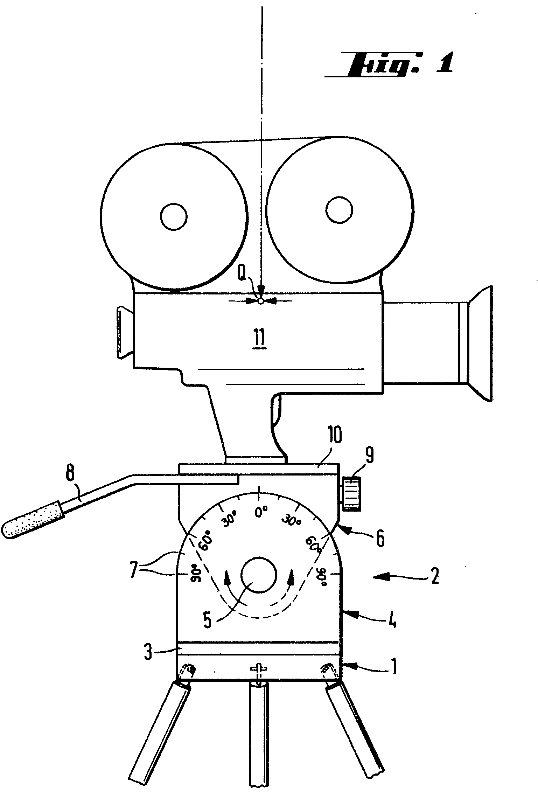

Fig. 1 zeigt auf einem schematisch angedeuteten Stativ 1 einen mittels nicht näher angedeuteten Befestigungsmitteln gehalterten Schwenkkopf 2. Der Schwenkkopf 2 enthält ein von einer Grundplatte 3 vertikal nach oben ragendes Statorteil 4. In dem Statorteil 4 ist eine horizontal verlaufende Drehachse 5 schwenkbar befestigt, die auf der von der Zeichenebene gemäß Fig. 1 abgekehrten Seite von dem Statorteil absteht. Auf der Drehachse 5, die schwenkbar mit dem Statorteil 4 verbunden ist, ist ein Rotorteil 6 so gelagert, daß es mit der Drehachse 5 aus der in Fig. 1 gezeigten Lage im Uhrzeigersinn und im Gegenuhrzeigersinne geschwenkt werden kann. Der Schwenkwinkel läßt sich durch eine Skala 7 ablesen, die am oberen Rand des an der Oberseite abgerundeten Statorteils 4 angebracht ist. Das Rotorteil ist des weiteren mit einem Handgriff 8 versehen, sowie mit einem Verstellmechanismus, von dem lediglich der Einstellknopf 9 sichtbar ist. Auf der Oberseite des Rotorteiles 6 ist eine Grundplatte 10 angebracht, welche nicht näher dargestellte Befestigungsmittel für die Halterung einer Kamera 11 enthält. Die Befestigungsmittel können dabei in bekannter Weise derart ausgebildet sein, daß der durch den Punkt Q angedeutete Schwerpunkt der Kamera über die Drehachse 5 zu liegen kommt, wenn die gesamte Anordnung die in Fig. 1 gezeigte neutrale Lage einnimmt.

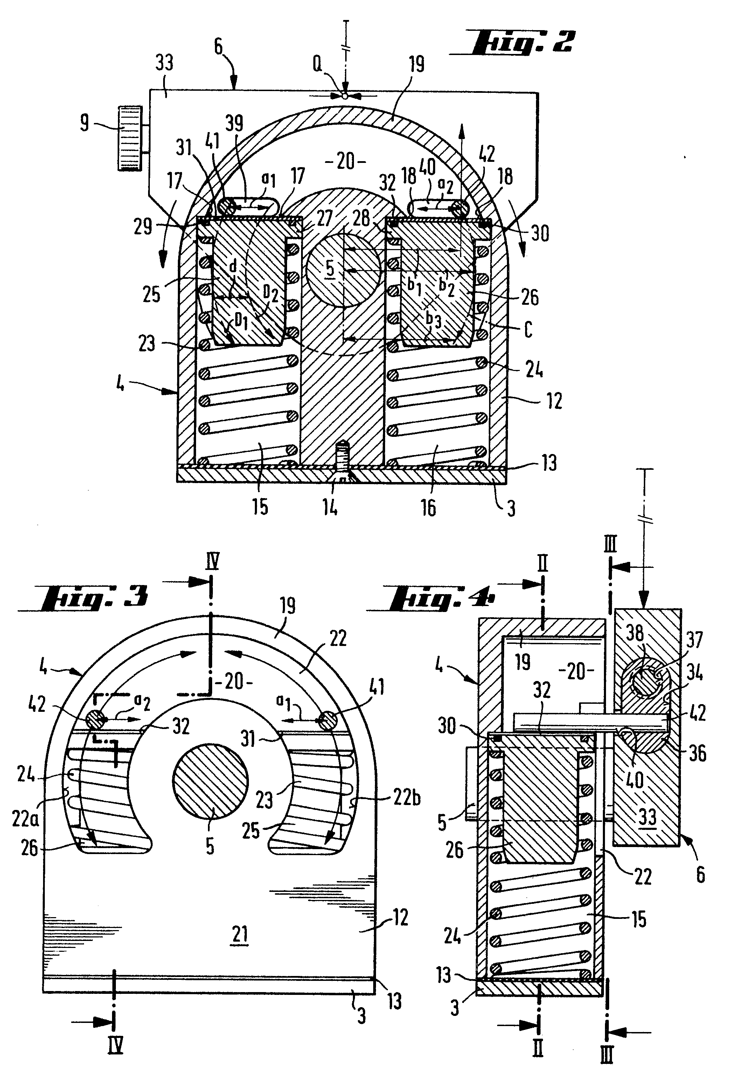

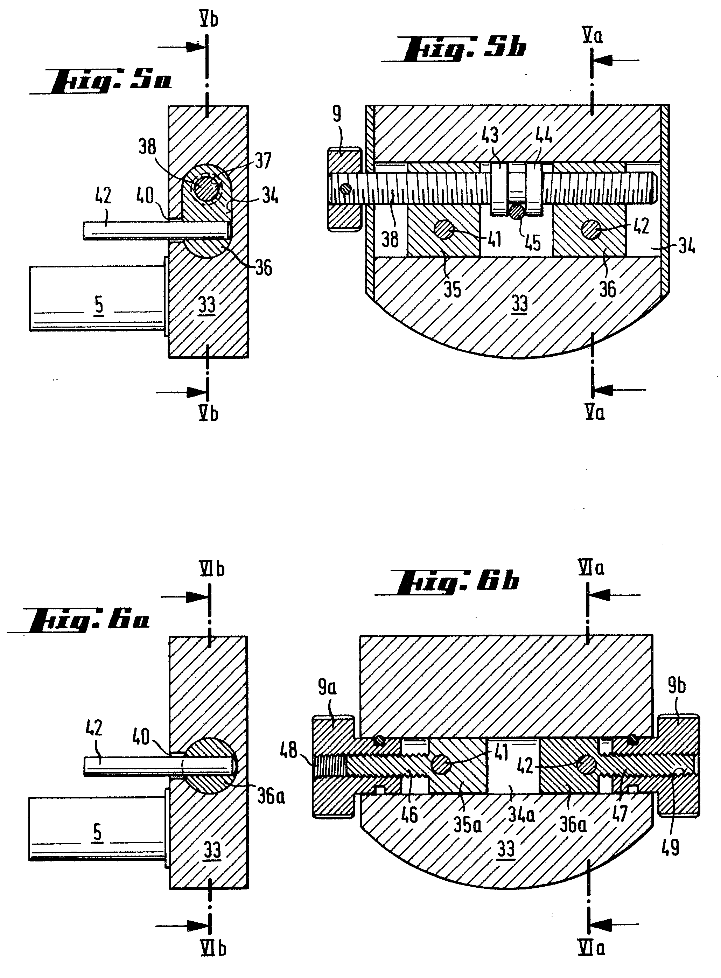

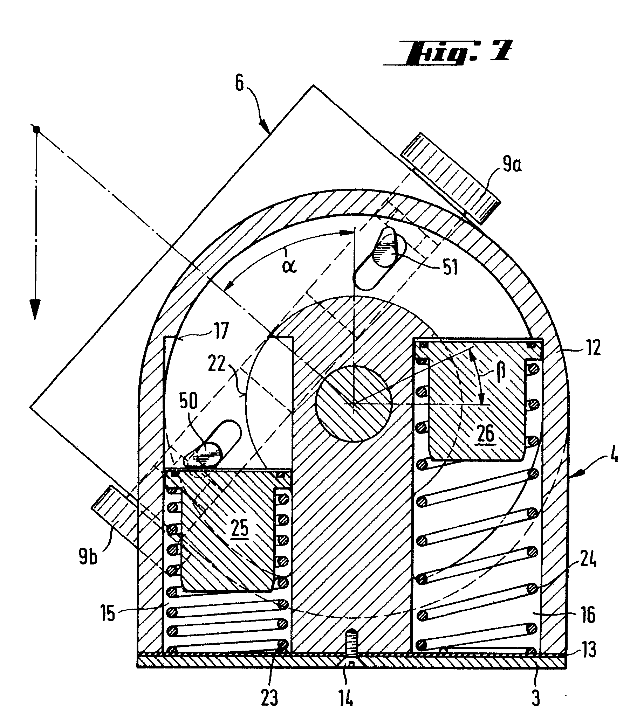

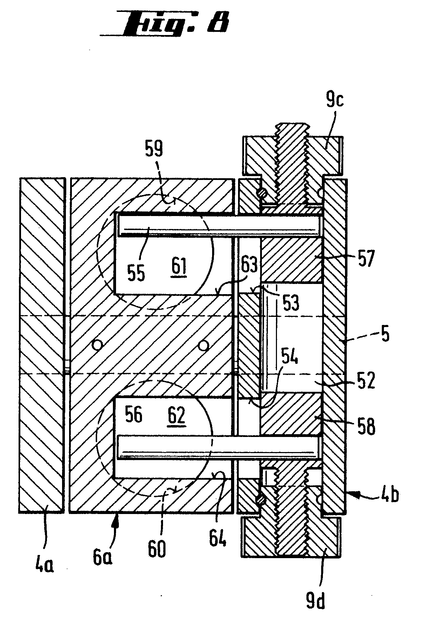

Der Ausgleich des von dem Rotorteil 6 und der Kamera 11 bei einem Verschwenken im Uhrzeigersinne oder gegen den Uhrzeigersinn erzeugten Drehmoments erfolgt durch eine Konstruktion des Schwenkkopfes wie sie am deutlichsten aus den Fig. 2—4 ersichtlich wird. Der Statorteil 4 besteht aus einem auf die Grundplatte 3 aufgesetzten Gehäuse 12. Die Grundplatte 3 ist an das Gehäuse 12 unter Zwischenlegung einer Schicht 13 aus einem elastisch nachgiebigem Material wie Gummi angeschraubt, beispielsweise mittels einer Schraube 14. Das vorzugsweise massive Gehäuse trägt in seinem mittleren Bereich ein Lager für eine Drehachse 5. Rechts und links von der Drehachse 5 und senkrecht zu dieser verlaufen bis an den Boden des Gehäuses reichende zylindrische Bohrungen 15 und 16, die im oberen Bereich des Gehäuses 12 enden und mit Durchtrittsöffnungen 17 und 18 versehen sind, welche kleiner sind als die Querschnittsflächen der zylindrischen Bohrungen. Das Gehäuse 12 kann über den Durchtrittsöffnungen enden. Bei dem dargestellten Ausführungsbeispiel enthält es jedoch eine kreisbogenförmig um den Mittelpunkt der Drehachse 5 verlaufende Abdeckung 19, so daß oberhalb der Durchtrittsöffnungen 17 und 18 ein zusammenhängender, gewölbeähnlicher Hohlraum 20 entsteht, der auf der nach außen gekehrten Seite wie aus Fig. 1 ersichtlich, durch die Außenwandung des Gehäuses verschlossen ist. Auf der nach innen, d. h. dem Rotorteil 6 zugekehrten Seitenwandung 21 des Gehäuses 12 ist eine Öffnung 22 vorgesehen, die wie Fig. 3 hervorgeht, kreisringförmig und im oberen Bereich der Kontur der Abdeckung 19 folgend ausgebildet ist und einen Zugang zu dem Hohlraum 20 schafft. Der Kreisring der Öffnung 22 ist dabei soweit nach unten fortgesetzt, daß die zylindrischen Bohrungen 15 und 16 seitlich ebenfalls offen liegen. Die auf diese Weise in die zylindrischen Bohrungen 15 und 16 reichenden Schlitze können auch geradlinig ausgebildet sein.

Die oberen Enden der zylindrischen Bohrungen 15 und 16, d. h. die von den Durchtrittsöffnungen 17 und 18 festgelegte Ebene liegt oberhalb des Mittelpunktes der Drehachse 5. Die in die zylindrischen Bohrungen 15 und 16 hinabreichenden schlitzartigen Endbereiche 22a und 22b enden mit ihren Unterkanten unterhalb des Mittelpunkts der Drehachse 5 und zwar etwa ebensoviel unterhalb wie die von den Durchtrittsöffnungen 17 und 18 gebildete Ebene oberhalb dieses Mittelpunktes liegt.

Im Inneren der zylindrischen Bohrungen 15 und 16 sind Schraubenfedern 23, 24 aufgenommen, deren Außendurchmesser derart gewählt ist, daß sie bei einer Komprimierung von den Außenwänden der Bohrungen geführt werden. Die Schraubenfedern 23 und 24 tragen an ihren oberen Enden Führungsbolzen 25, 26, die in das Innere der Federn eingesteckt sind und verhindern sollen, daß die Federn bei einer Komprimierung auswandern. Die Führungsbolzen 25 und 26 ragen dabei soweit nach unten, daß sie bei der maximalen möglichen Komprimierung der Federn 23 und 24 gerade noch nicht an dem Boden des Gehäuses 12 bzw. am Dämpfungsglied 13 anliegen. Die Führungsbolzen 25 und 26 sind an ihrem oberen Ende mit einem umlaufenden Schulterbereich 27, 28 versehen, über den sie auf den Federn 23 und 24 aufliegen. Die Außendimensionen des Schulterbereichs 27, 28 entsprechen dabei der Innenkontur der zylindrischen Bohrungen 15, 16. Auf der Oberseite der Führungsbolzen 25, 26 sind Dämpfungsglieder 29, 30 angebracht, vorzugsweise als Ring aus elastisch nachgiebigem Material. Über den Dämpfungsgliedern sind Plättchen 31, 32 aufgebracht, deren Kontur etwa derjenigen der zylindrischen Bohrungen 15, 16 bzw. des Schulterbereichs 27, 28 entspricht. Die Plättchen 31 und 32 bestehen aus einem festen Material. Ihre nach oben gekehrte, im Bereich der Durchtrittsöffnungen 17, 18 freiliegende Oberfläche wird im Rahmen dieser Anmeldung als »Stirnfläche der Feder« bezeichnet.

Die Federn 23 und 24 sind derart dimensioniert, daß sie bei Einnahme der in den Fig. 2—4 gezeigten Lage entspannt sind oder nur unter einer sehr geringen Vorspannung stehen.

Beim Zusammenbau des Statorteiles 4 werden zunächst in die zylindrischen Bohrungen 15 und 16 die Plättchen 31 und 32 eingebracht, anschließend die mit den Dämpfungsgliedern 29 und 30 versehenen Führungsbolzen 25 und 26 und schließlich die Federn 23 und 24, jeweils von der Unterseite des Gehäuses. Anschließend wird die Dämpfungsschicht 13 eingebracht und die Grundplatte 3 mittels der Schraube 14 angeschraubt. Das umgekehrte Vorgehen wird zum Austausch der Federn, Führungsbolzen, Dämpfungsglieder oder Plättchen durchgeführt.

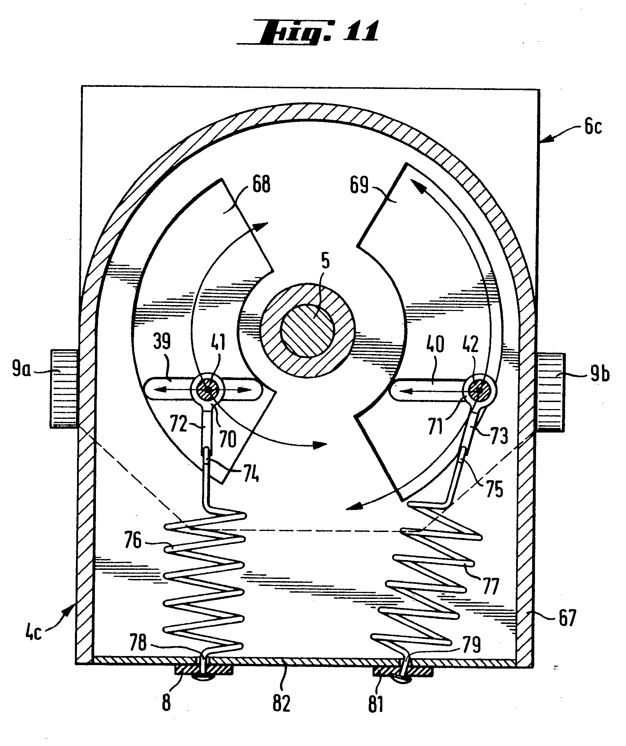

Der Rotorteil 6 besteht aus einem Block 33 mit zueinander parallelen, senkrecht zur Drehachse 5 verlaufenden Seitenwänden. In seinem Inneren verläuft oberhalb der Drehachse 5 und senkrecht zu dieser ein aus der Sicht von Fig. 2 horizontaler Kanal 34, in dem wie in Fig. 5 gezeigt, zwei Gleitstücke 35, 36 längsverschieblich geführt sind. In ihrem oberen Bereich sind die Gleitstücke 35, 36 von einer längs verlaufenden Gewindebohrung 37 durchsetzt, in welche ein Gewindebolzen 38 eingeschraubt ist, der mit dem Einstellknopf 9 verbunden ist. Auf die Einzelheiten des Verstellmechanismus wird im folgenden unter Fig. 5 und 6 noch näher eingegangen.

Auf der dem Statorteil 4 zugekehrten Seitenfläche des Blocks 33 sind Durchgangsbohrungen 39 und 40 angebracht, die in den unteren Bereich des Kanals 34 münden. Die Durchgangsbohrungen 39 und 40 weisen die Form von Längsschlitzen auf, die sich mit ihrer Unterkante längs der Plättchen 31 und 32 erstrecken, wenn das Rohrteil die in Fig. 2 gezeigte neutrale Lage einnimmt. In die Gleitstücke 35 und 36 sind Bolzen 41 und 42 mit einem Ende eingesetzt, die parallel zur Drehachse 5 verlaufen und aus den Durchgangsbohrungen 39 und 40 herausragen. Die Bolzen 41 und 42 erstrecken sich durch die Öffnung 22 in dem Gehäuse 12 des Statorteiles 4 über die Plättchen 31 und 32 derart, daß die Unterseiten des Bolzens 41 und 42 an den Plättchen 31 und 32 anliegen wenn der Schwenkkopf die neutrale Lage einnimmt.

Bei der Drehung des Einstellknopfes 9 und der dadurch bedingten Verschiebung der Gleitstücke 35 und 36 werden die Bolzen 41 und 42 in den Durchgangsbohrungen 19 und 40 in Richtung der Pfeile a1 und a2 längs der Oberfläche der Plättchen 31 und 32 verschoben. Auf diese Weise läßt sich der wirksame Hebelarm, mit dem das von der Kamera 11 und dem Rotorteil 6 um den Mittelpunkt der Drehachse 5 ausgeübte Drehmoment auf das Statorteil 4 übertragen wird, d. h. der durch das Bezugszeichen b1 angedeutete Abstand zwischen dem Auflagepunkt des Bolzens 42 und dem Mittelpunkt der Drehachse 5 variieren. Hierdurch erreicht man eine Änderung des von der Feder 23 bzw. 24 ausgeübten Rückstellmoments. Die Verschiebung ermöglicht somit in einfacher Weise eine Anpassung an verschieden schwere Kameras — falls die Verschiebung der Bolzen 41 und 42 bezogen auf ihre durch den Mittelpunkt der Drehachse gehende Symmetrieebene spiegelbildlich erfolgt. Eine gleichsinnige Verschiebung der Bolzen 41 und 42 ermöglicht dagegen eine Anpassung des Schwenkkopfs an Verschiebungen des Schwerpunkts Q, was dann stattfinden kann, wenn die gleiche Kamera mit unterschiedlichen Objektiven oder Zusätzen verwendet wird.

Bei dem in Fig. 5 dargestellten Verstellmechanismus sind die Gewindegänge auf dem Gewindebolzen 38 im aus der Sicht von Fig. 5b linken, das Gleitstück 35 durchsetzenden Bereich gegenläufig gewendelt zu dem rechten, das Gleitstück 36 durchsetzenden Bereich. Diese beiden Bereiche werden durch zwei Bünde 43, 44 getrennt, zwischen denen ein Stift 45 eingreift, welcher auf diese Weise den Gewindebolzen 38 gegenüber seiner Längsverschiebung arretiert. Aufgrund dieser Ausgestaltung führt eine Drehung des Einstellknopfs 9 zu einer gegenläufigen Verschiebung der Gleitstücke 35 und 36, so daß mit einer einzigen Einstellung des Einstellknopfes 9 eine Anpassung an unterschiedliche Kameragewichte sowohl bezüglich einer Verschwenkung im Uhrzeigersinne als auch bezüglich einer Verschwenkung im Gegenuhrzeigersinn vorgenommen werden.

Bei der in Fig. 6 dargestellten zweiten Ausführungsform für den Verstellmechanismus ist ein kreisförmiger Kanal 34a vorgesehen, und die Bolzen 41 und 42 sind in der Mitte von Gleitstücken 35a, 36a angebracht, welche auf ihren nach außen gekehrten Seiten einen im Durchmesser dünneren mit Außengewinde versehenen schraubenbolzenartigen Fortsatz 46, 47 tragen, der in eine mit Innengewinde versehene Bohrung 48, 49 von Einstellknöpfen 9a und 9b eingeschraubt ist, welche an den äußeren Enden des Kanals 34a drehbar gehaltert sind. Eine in eine Umlaufnut in den Einstellknöpfen 9a, 9b eingreifende Kugelraste hält die Einstellknöpfe 9a und 9b in ihrer Lage. Die beschriebene Ausgestaltung erlaubt eine unabhängige Verschiebung der Gleitstücke 35a und 36a und eignet sich besonders für diejenigen Fälle, bei denen die gleiche Kamera mit unterschiedlichen Vorsatzobjektiven oder unterschiedlichen anderen Zusatzgeräten verwendet wird, welche eine Verschiebung des Schwerpunktes Q quer zur Drehachse 5 bewirken.

Fig. 7 zeigt eine weitere Ausführungsform des in Fig. 2 bis 4 gezeigten Schwenkkopfes, bei der ein Verstellmechanismus der in Fig. 6 beschriebenen Art verwendet ist. Ansonsten unterscheidet sich die in Fig. 7 gezeigte Vorrichtung von der vorgenannten lediglich dadurch, daß anstelle von Bolzen 41 und 42 mit kreisförmigem Querschnitt Bolzen 50 und 51 verwendet sind, die im Bereich ihrer Anlage an den Plättchen 31 und 32 als Nocken ausgebildet sind, so daß während der Schwenkbewegung wie in Fig. 7 angedeutet, der Eingriffsbereich des Bolzens 50 oder 51 mit dem zugehörigen Plättchen 31 und 32 längs der Nockenoberfläche wandert. Der bei der jeweiligen Schwenkstellung wirksame Hebelarm, d. h. der jeweilige Abstand des Auflagepunktes des Bolzens 50 oder 51 auf den Plättchen 31 oder 32 von einer die Drehachse 5 in Richtung der Schwerkraft durchsetzenden Ebene erfährt daher in Abhängigkeit vom Drehwinkel eine zusätzliche Änderung. Gleichzeitig ändert sich auch die in Auslenk- d. h. Kompressionsrichtung der Feder wirksame Verschiebungskomponente. Durch eine geeignete Wahl des bei einer Verschwenkung des Rotorteiles von den Bolzen 41, 42 bzw 50, 51 durchlaufenden Winkelbereichs, d. h. insbesondere durch die Wahl des Winkels $\beta$ den der Radiusvektor von der Drehachse zu dem Auflagepunkt des Rotorteils auf der Stirnfläche der Feder mit einer senkrecht zur Kompressionsachse derselben verlaufenden Fläche einschließt und/oder durch eine geeignete Gestaltung der Nockenfläche der Bolzen 50 bzw. 51 läßt sich der Charakteristik des Rückstellmomentes der gewünschte Zuschnitt geben, so daß sich dieses im Idealfalle mit dem Cosinus des Schwenkwinkels $\alpha$ ändert oder zumindest diesem in weiten Bereichen angenähert ist.

Es ist selbstverständlich möglich, auch die Plättchen 31, 32 als Nockenflächen auszubilden. Dies ist speziell dann zweckmäßig, wenn der Schwenkkopf lediglich für ein bestimmtes Gewicht verwendet werden soll.

In Fig. 2 ist mittels der strichpunktiert gezeichneten Kurve C der Weg angedeutet, den der Auflagepunkt des Bolzens 42 auf dem Plättchen 32 während eines Verschwenkens des Schwenkkopfes im Uhrzeigersinne durchläuft. Mit b1 ist der wirksame Hebelarm in der Ausgangslage, mit b2 der maximale, während der Schwenkbewegung eingenommene Hebelarm mit b3 der in der Endphase der Schwenkbewegung eingenommene Hebelarm zeichnet. Die wirksame Länge der Hebelarme durchläuft somit bei dieser Anordnung ein Maximum. Gleichzeitig mit der Änderung der wirksamen Länge der Hebelarme ändert sich auch die in Auslenkrichtung der Feder wirksame Verschiebungskomponente, wobei diese ebenfalls ein Maximum durchläuft. Die strichlinierten Pfeile D1 und D2 zeigen für die beiden bei einer Betätigung des Einstellknopfes 9 erzielbaren Extremstellungen des Bolzens 41 die wirksamen Längen der Hebelarme, wobei der Abstand d deren gleichbleibende Differenz wiedergibt.

Es ist selbstverständlich auch möglich, die Drehachse 5 starr mit dem Statorteil 4 zu verbinden und ein Schwenklager in dem Rotorteil vorzusehen. Aus Platzgründen ist jedoch im allgemeinen die in den Figuren gezeigte Anordnung vorzuziehen.

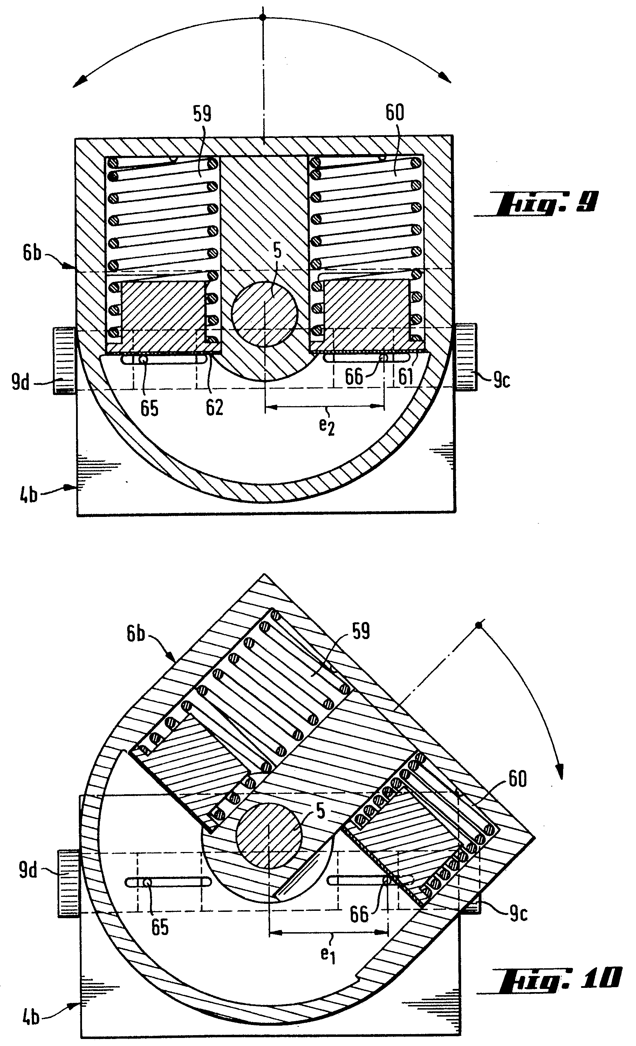

Fig. 8 zeigt im Horizontalschnitt eine Variante des Schwenkkopfes, wobei jedoch die zur Halterung der Kamera vorgesehene Grundplatte 10 weggelassen ist. Das Statorteil besteht hier aus zwei in Abstand voneinander längs der Drehachse 5 angeordneten wangenartigen planparallelen Platten 4a und 4b, wobei die aus der Sicht von Fig. 8 rechte Platte 4b einen senkrecht zur Drehachse 5 verlaufenden Kanal 52 enthält, der in Richtung auf die gegenüberliegende Platte 4a zwei Durchgangsbohrungen 53 und 54 enthält, durch welche Bolzen 55 und 56 hindurchragen. Die Bolzen 55 und 56 sind mit ihren Enden in Gleitstücken 57 und 58 gelagert, die in dem Kanal 52 mit Hilfe von Einstellknöpfen 9c und 9d in entsprechender Weise verschiebbar sind, wie die Gleitstücke 35a und 36a von Fig. 6, so daß im einzelnen hierauf verwiesen wird. Das Rotorteil 6a enthält in diesem Beispiel zwei senkrecht zur Drehachse 5 verlaufende zylindrische Bohrungen 59 und 60, in deren Inneren nicht näher dargestellte Schraubenfedern, Führungsbolzen, Dämpfungsglieder sowie die ersichtlichen Plättchen 61 und 62 in entsprechender Weise wie anhand der Fig. 2 und 4 gezeigt, aufgenommen sind. Auf der der Platte 4b zugekehrten Seitenfläche des Rotorteils 6 sind in das Innere der zylindrischen Bohrungen 59, 60 führende schlitzartige Durchbrüche 63, 64 vorgesehen, durch welche die Bolzen 55, 56 hindurchreichen. Die Arbeitsweise dieser Vorrichtung entspricht weitgehend derjenigen der vorstehend beschriebenen Ausführungsform, wobei jedoch aufgrund der Vertauschung von Stator und Rotorteil bei einer Schwenkbewegung des Rotorteils im Uhrzeigersinne die Kraftübertragung über die entgegengesetzte, d. h. bezüglich der Drehachse im Gegenuhrzeigersinn gelegene Feder und den zugehörigen Bolzen erfolgt. Selbstverständlich können auch hier die Bolzen nockenförmig ausgebildet sein.

Eine weitere Variante des Schwenkkopfes ist in den Fig. 9 und 10 dargestellt. Diese Ausführungsform entspricht im wesentlichen derjenigen von Fig. 8, wobei jedoch der Rotorteil 6b, wie in Fig. 9 gezeigt, in seiner Ausgangsstellung bezüglich der Drehachse 5 um 180° verdreht ist. Dies bedeutet, daß die Federn in diesem Falle über die Bolzen zu liegen kommen, während sie bei dem Beispiel von Fig. 8 unter diesen angeordnet sind. Als Besonderheit der in den Fig. 8—10 gezeigten Ausführungsbeispiele gegenüber denjenigen der Fig. 1—7 sei erwähnt, daß sich hier die Länge des wirksamen Hebelarmes während des Verschwenkens nicht ändert, sondern lediglich die in Kompressionsrichtung der jeweiligen Feder wirksame Verschiebungskomponente. Man erkennt dies aus den Fig. 9 und 10, in denen mit e1 und e2 die wirksame Hebellänge abgezeichnet ist. Dies gilt selbstverständlich nur insoweit, als ein dünner Bolzen 65, 66 verwendet wird, dessen Durchmesser im Auflagebereich vernachlässigbar klein ist.

Fig. 11 zeigt eine weitere Variante des Schwenkkopfes in einem vertikalen Schnitt entsprechend demjenigen von Fig. 2. Der Schwenkkopf besteht aus einem Rotorteil 6c, das identisch aufgebaut ist wie das in Fig. 6 gezeigte Rotorteil. Es sind daher für die gleichen Teile die gleichen Bezugszeichen verwendet. Das Rotorteil steht in Wirkverbindung mit einem Statorteil 4c, das aus einem Gehäuse 67 besteht, welches in seiner Mitte die Drehachse 5 schwenkbar lagert. Die dem Rotorteil 6c zugekehrte Seitenwandung des Gehäuses 67 enthält zwei kreisringsegmentartige Durchbrüche 68, 69 durch welche die Bolzen 41 und 42 in das Innere des Gehäuses 67 hineinragen. An den freien Enden der Bolzen 41, 42 sind gegenüber diesen drehbare Hülsen 70, 71 aufgesteckt, welche schlaufenförmige Fortsätze 72, 73 tragen. In die schlaufenförmigen Fortsätze 72 und 73 sind schlaufenförmige Enden 74 und 75 von Schraubenfedern 76, 77 eingehängt, deren entgegengesetzte Enden 78, 79 über ein elastisches Dämpfungsglied 80, 81 an einem Boden 82 des Gehäuses 67 befestigt sind. Die Federn 76 und 77 sind zwischen ihren Endaufhängungen frei beweglich. Auf diese Weise wird erreicht, daß bei einer Schwenkbewegung zwischen Statorteil 4c und Rotorteil 6c im Uhrzeigersinne die Feder 76 zunehmend gespannt wird, wobei sich neben der wirksamen Länge des Hebelarmes auch die in Zugrichtung der Feder wirksame Verschiebungskomponente ändert. Die Anordnung zeigt beispielhaft, daß der Schwenkkopf nicht nur mit Druck- sondern auch mit Zugfedern zu verwirklichen ist. Die in den Ansprüchen und der Beschreibung verwendete Bezeichnung »Auslenkrichtung der Feder« ist daher allgemein zu verstehen, d. h. sie umfaßt bei Druckfedern die Richtung, in der die Kompression erfolgt, bei Zugfedern, die Richtung, in der eine Dehnung erfolgt. Bei Schraubenfedern fallen diese Richtungen jeweils mit der Längsachse der Feder zusammen. Bei einer Verschwenkung des Rotorteiles 6c entgegen dem Uhrzeigersinne erzeugt die Feder 77 das Rückstellmoment. Durch die ineinander eingehängten schlaufenförmigen Fortsätze der Hülsen und der Federn wird erreicht, daß der bei der jeweiligen Schwenkbewegung nicht zur Erzeugung eines Rückstellmomentes beitragende Bolzen in Richtung auf seine zugehörige Feder verschiebbar ist, ohne daß diese Feder komprimiert wird oder den Bewegungsablauf behindert. Die Wirkungsweise des von den Einstellknöpfen 9a und 9b betätigten Verstellmechanismus ist die gleiche wie in den vorstehend beschriebenen Beispielen, so daß hierauf nicht näher eingegangen werden muß.

Vorstehend waren die Schwenkköpfe im Zusammenhang mit Stativen und Kameras beschrieben worden. Es versteht sich jedoch, daß die Schwenkköpfe auch für alle anderen Anwendungszwecke geeignet sind, bei denen ein Körper verschiedene Schwenkstellungen einnehmen muß und ein Ausgleich des jeweils erzeugten Drehmoments erwünscht ist. Als diesbezügliche Beispiele sei die Halterung von Lampen, Scheinwerfern, Zielgeräten und so weiter genannt.

## Patentansprüche

1. Vorrichtung zum Ausgleich von Drehmomenten, die bei einem Kippen eines um eine feste Drehachse (5) schwenkbar gelagerten Körpers (6) entstehen, mit einem Statorteil (4) und mit einem den Körper bildenden oder aufnehmenden Rotorteil (6), wobei der Statorteil (4) und der Rotorteil (6) über die feste Drehachse (5) gegeneinander verschwenkbar verbunden sind und zumindest eine zwischen Statorteil (4) und Rotorteil (6) wirkende Feder (23, 24) eine dem Drehmoment entgegengerichtete Rückstellkraft ausübt, insbesondere Schwenkkopf (2) für Kameras (11) und Beleuchtungsgeräte, dadurch gekennzeichnet, daß die Übertragung des Drehmoments auf die zumindest eine Feder (23, 24) über zumindest einen Hebelarm erfolgt, dessen wirksame Länge (b₁, b₂, b₃) und/oder dessen in Auslenkrichtung der Feder (23, 24) wirksame Verschiebungskomponente bei einem Verschwenken des Rotorteils (6) gegenüber dem Statorteil (4) mit der Änderung des Drehmoments im gleichen Sinne variiert bzw. variieren.

2. Vorrichtung nach Anspruch 1, dadurch gekennzeichnet, daß die zumindest eine Feder (23, 24) eine lineare Kennlinie aufweist.

3. Vorrichtung nach Anspruch 1 oder 2, dadurch gekennzeichnet, daß bei der zumindest einen Feder (23, 24) die Auslenkrichtung geradlinig verläuft.

4. Vorrichtung nach einem der vorstehenden Ansprüche, dadurch gekennzeichnet, daß die wirksame Länge (b₁, b₂, b₃) der Hebelarme und/oder deren wirksame Verschiebungskomponente in Auslenkrichtung der zugehörigen Feder bei einem Verschwenken des Rotorteiles (6) gegenüber dem Statorteil (4) derart variieren, daß sich das Rückstelldrehmoment mit dem Sinus des Schwenkwinkels (α) ändert.

5. Vorrichtung nach einem der vorstehenden Ansprüche, dadurch gekennzeichnet, daß zumindest eine Feder und zumindest ein Hebelarm für eine Schwenkbewegung im Uhrzeigersinne und zumindest eine Feder sowie zumindest ein Hebelarm für eine Schwenkbewegung entgegen dem Uhrzeigersinne vorgesehen sind.

6. Vorrichtung nach einem der vorstehenden Ansprüche, gekennzeichnet durch einen Verstellmechanismus für die Einstellung der wirksamen Hebellängen in Abhängigkeit von Gewichts- und Schwerpunktlage des Körpers.

7. Vorrichtung nach den Ansprüchen 5 und 6, gekennzeichnet durch je einen separaten Verstellmechanismus für den zumindest einen bei einer Schwenkbewegung im Uhrzeigersinne wirksamen Hebelarm und den zumindest einen bei einer Schwenkbewegung gegen den Uhrzeigersinn wirksamen Hebelarm.

8. Vorrichtung nach Anspruch 7, dadurch gekennzeichnet, daß die beiden Verstellmechanismen gemeinsam betätigbar sind.

9. Vorrichtung nach Anspruch 7, dadurch gekennzeichnet, daß die beiden Verstellmechanismen getrennt betätigbar sind.

10. Vorrichtung nach einem der vorstehenden Ansprüche, gekennzeichnet durch eine Einstellvorrichtung auf dem Rotorteil zum Verschieben des Schwerpunkts eines auf diesem befestigten Körpers senkrecht zur Drehachse.

11. Vorrichtung nach einem der vorstehenden Ansprüche, dadurch gekennzeichnet, daß sich der Rotorteil an dem Statorteil mittels zumindest eines Auflagepunkts abstützt, der sich während der Schwenkbewegung auf einer Stirnfläche der Feder verschiebt, während er die Feder zusammendrückt oder entlastet.

12. Vorrichtung nach Anspruch 11, dadurch gekennzeichnet, daß sich der Rotorteil an dem Statorteil über eine Nockenfläche abstützt, längs der sich der Auflagepunkt während der Schwenkbewegung verschiebt.

13. Vorrichtung nach Anspruch 12, dadurch gekennzeichnet, daß die Stirnfläche der Feder nockenartig ausgebildet ist.

14. Vorrichtung nach Anspruch 11 oder 12, dadurch gekennzeichnet, daß die Stirnfläche senkrecht zur Auslenkrichtung der Feder verläuft und/oder eben ist.

15. Vorrichtung nach einem der Ansprüche 11 bis 14, dadurch gekennzeichnet, daß die Auslenkachse der zumindest einen Feder senkrecht zur Drehachse und in einem radialen Abstand von dieser verläuft.

16. Vorrichtung nach Anspruch 15, dadurch gekennzeichnet, daß die Auslenkrichtung der Feder vertikal verläuft, wenn die Vorrichtung ihre normale Arbeitslage einnimmt.

17. Vorrichtung nach einem der Ansprüche 11 bis 16, dadurch gekennzeichnet, daß die in einer Schwenkrichtung wirksamen Federn längs einer parallel zur Drehachse und im Abstand von dieser verlaufenden Geraden angeordnet sind.

18. Vorrichtung nach einem der vorstehenden Ansprüche, dadurch gekennzeichnet, daß der Rotorteil zwischen zwei durch die Drehachse verbundenen wangenartigen Bereichen des Statorteiles geführt ist.

19. Vorrichtung nach Anspruch 18, dadurch gekennzeichnet, daß die Federn in dem Statorteil aufgenommen sind.

20. Vorrichtung nach einem der Ansprüche 1 bis 18, dadurch gekennzeichnet, daß die Federn in dem Rotorteil aufgenommen sind.

21. Vorrichtung nach Anspruch 20, dadurch gekennzeichnet, daß der zumindest eine Verstellmechanismus in einem der wangenartigen Bereiche aufgenommen ist.

22. Vorrichtung nach einem der vorstehenden Ansprüche, dadurch gekennzeichnet, daß die Federn Schraubenfedern enthalten, die in zylindrischen Hülsen aufgenommen sind.

23. Vorrichtung nach Anspruch 22, dadurch gekennzeichnet, daß die zylindrischen Hülsen zumindest in der derStirnfläche der Federn zugekehrten Seite mit einem seitlichen Schlitz und/oder zumindest an einem ihrer Enden mit einem Dämpfungsglied versehen sind.

24. Vorrichtung nach Anspruch 22 oder 23, dadurch gekennzeichnet, daß in die Schraubenfedern Führungsbolzen eingesetzt sind, deren freie Fläche die nockenartig oder eben ausgebildete Stirnfläche für den Angriff des Auflagepunktes bildet.

25. Vorrichtung nach einem der vorstehenden Ansprüche, gekennzeichnet durch zumindest ein Dämpfungsglied zwischen Statorteil und Rotorteil.

26. Vorrichtung nach einem der Ansprüche 22 bis 25, dadurch gekennzeichnet, daß die nockenartig oder eben ausgebildete Stirnfläche über ein Dämpfungsglied mit der jeweiligen Feder in Wirkverbindung steht.

27. Vorrichtung nach einem der vorstehenden Ansprüche, dadurch gekennzeichnet, daß der zumindest eine Auflagepunkt von dem freien Ende einer Rolle oder eines Bolzens gebildet ist, die bzw. der von dem Rotorteil bzw. dem Statorteil vorsteht.

28. Vorrichtung nach Anspruch 27, dadurch gekennzeichnet, daß der Bolzen nockenartig ausgebildet ist.

29. Vorrichtung nach Anspruch 27 oder 28, dadurch gekennzeichnet, daß der Bolzen oder die Rolle seitlich von dem Rotorteil bzw. Statorteil parallel zur Drehachse und in einem Abstand von dieser abstehen.

30. Vorrichtung nach einem der Ansprüche 27 bis 29, dadurch gekennzeichnet, daß der Verstellmechanismus eine Verstellschraube enthält, welche den Bolzen oder die Rolle längs einer vorgegebenen Kurve senkrecht zur Drehachse verschiebt.

31. Vorrichtung nach Anspruch 29, dadurch gekennzeichnet, daß der Bolzen oder die Rolle in einem Führungsblock gehaltert sind, der längs einer zylindrischen Bohrung verschiebbar ist und daß die Verstellschraube über eine Gewindebohrung in Wirkverbindung mit dem Führungsblock steht.

32. Vorrichtung nach einem der Ansprüche 1 bis 19 und 21 bis 31, dadurch gekennzeichnet, daß der Winkel ($\beta$) den der Radiusvektor von der Drehachse zu dem Auflagepunkt des Rotorteiles auf der Stirnfläche der Feder mit einer senkrecht zur Auslenkrichtung der Feder verlaufenden Fläche einschließt, zwischen etwa 10 bis etwa 80°, vorzugsweise etwa 15 bis 45° beträgt, wenn die Vorrichtung bezüglich der Schwenkbewegung ihre Ruhelage einnimmt.

33. Vorrichtung nach Anspruch 32, dadurch gekennzeichnet, daß der Winkel etwa 36° beträgt.

34. Vorrichtung nach Anspruch 32 oder 33, dadurch gekennzeichnet, daß die zumindest eine Feder in der Ruhelage entspannt ist.

35. Vorrichtung nach einem der Ansprüche 11 bis 34, dadurch gekennzeichnet, daß der zumindest eine Hebelarm und die zugehörige Feder so angeordnet sind, daß die wirksame Länge des Hebelarmes während der Schwenkbewegung ein Maximum durchläuft.

36. Vorrichtung nach einem der vorstehenden Ansprüche, dadurch gekennzeichnet, daß die Federn allein auf Druck beansprucht sind.

37. Vorrichtung nach einem der Ansprüche 1 bis 35, dadurch gekennzeichnet, daß die Federn allein auf Zug beansprucht sind.

**Claims**

1. Device for compensating torques arising during tilting of a body (6) mounted pivotably about a fixed shaft (5), with a stator part (4) and with a rotor part forming or receiving the body, the stator part (4) and the rotor part (6) being connected pivotably relative to one another via the fixed shaft (5) and at least one spring (23, 24) acting between the stator part (4) and the rotor part (6) exerting a restoring force directed against the torque, especially a pivoting head (2) for cameras (11) and lighting equipment, characterized in that the torque is transmitted to at least on spring (23, 24) via at least one lever arm, of which the effective length (b₁, b₂, b₃) and/or the displacement component effective in the direction of deflection of the spring (23, 24) varies, or vary, in the same sense with the change in the torque when the rotor part (6) is pivoted in relation to the stator part (4).

2. Device as claimed in claim 1, characterized in that at least one spring has a linear characteristic.

3. Device as claimed in claim 1 or 2, characterized in that the direction of deflection, in the case of at least one spring (23, 24), runs in a straight line.

4. Device as claimed in one of the preceding claims, characterized in that the effective length (b₁, b₂, b₃) of the lever arms and/or their effective displacement component in the direction of deflection of the associated spring vary when the rotor part (6) is pivoted in relation to the stator part (4), in such a way that the restoring torque changes with the sine of the pivoting angle ($\alpha$).

5. Device as claimed in one of the preceding claims, characterized in that at least one spring and at least one lever arm are provided for a pivoting movement in the clockwise direction, and at least one spring and at least one lever arm are provided for a pivoting movement in the anti-clockwise direction.

6. Device as claimed in one of the preceding claims, characterized in that an adjusting mechanism for the setting of the effective lever lengths in dependence on the weight and centre of gravity position of the body.

7. Device as claimed in claims 5 and 6, characterized in that separate adjusting mechanism is present in each case, for at least one lever arm which is effective during a pivoting movement in the clockwise direction, and for at least one lever arm which is effective during a pivoting movement in the anti-clockwise direction.

8. Device as claimed in claim 7, characterized in that the two adjusting mechanisms can be actuated together.

9. Device as claimed in claim 7, characterized in that the two adjusting mechanisms can be actuated separately.

10. Device as claimed in one of the preceding claims, characterized in that the rotor part carries an adjusting device for displacing the centre of gravity of a body fastened to this rotor part perpendicular to the shaft.

11. Device as claimed in one of the preceding claims, characterized in that the rotor part is supported on the stator part by means of at least one bearing point which shifts on an end face of the spring during the pivoting movement, whilst it compresses or unloads the spring.

12. Device as claimed in claim 11, characterized in that the rotor part is support on the stator part via a cam surface, along which the bearing point shifts during the pivoting movement.

13. Device as claimed in claim 12, characterized in that the end face of the spring is designed in the manner of a cam.

14. Device as claimed in claim 11 or 12, characterized in that the end face extends perpendicular to the direction of deflection of the spring and/or is flat.

15. Device as claimed in one of claims 11 to 14, characterized in that the axis of deflection of at least one spring extends perpendicularly to the shaft and at a radial distance from the latter.

16. Device as claimed in claim 15, characterized in that the direction of deflection of the spring runs vertically when the device assumes its normal working position.

17. Device as claimed in one of claims 11 to 16, characterized in that the spring which are effective in one pivoting direction are arranged along straight line running parallel to the shaft and at a distance from the latter.

18. Device as claimed in one of the preceding claims, characterized in that the rotor part is guided between two cheek-like regions of the stator part which are connected by the shaft.

19. Device as claimed in claim 18, characterized in that the springs are housed in the stator part.

20. Device as claimed in one of claims 1 to 18, characterized in that the springs are housed in the rotor part.

21. Device as claimed in claim 20, characterized in that at least one adjusting mechanism is housed in one of the cheek-like regions.

22. Device as claimed in one of the preceding claims, characterized in that the springs contain helical springs housed in cylindrical sleeves.

23. Device as claimed in claim 22, characterized in that the cylindrical sleeves are provided with a lateral slot at least in the side facing the end face of the springs and/or with a damping element at least at one of their ends.

24. Device as claimed in claim 22 or 23, characterized in that guide bolts, the free face of which forms the cam-like or flat end face on which the bearing point acts, are inserted into the helical springs.

25. Device as claimed in one of the preceding claims, characterized in that at least one damping element is present between the stator part and the rotor part.

26. Device as claimed in one of claims 22 to 25, characterized in that the cam-like or flat end face is operatively connected to the respective spring, via a damping element.

27. Device as claimed in one of the preceding claims, characterized in that at least one bearing point is formed by the free end of a roller or of a bolt which projects from the rotor part or the stator part.

28. Device as claimed in claim 27, characterized in that the bolt is designed in the manner of a cam.

29. Device as claimed in claim 27 or 28, characterized in that the bolt or the roller project laterally from the rotor part or the stator part, parallel to the shaft and at a distance therefrom.

30. Device as claimed in one of claims 27 to 29, characterized in that the adjusting mechanism contains an adjusting screw which displaces the bolt or the roller along a predetermined curve, perpendicularly to the shaft.

31. Device as claimed in claim 29, characterized in that the bolt or the roller is retained in a guide block which can be displaced along a cylindrical bore, and wherein the adjusting screw is operatively connected to the guide block via a threaded bore.

32. Device as claimed in one of claims 1 to 19 and 21 to 31, characterized in that the angle ($\beta$) formed by the radius vector from the shaft to the bearing point of the rotor part on the end face of the spring and by a surface extending perpendicularly to the direction of deflection of the spring is between approximately 10 to approximately 80° preferably approximately 15 to 45°, when the device assumes its position of rest in relation to the pivoting movement.

33. Device as claimed in claim 32, characterized in that the angle is approximately 36°.

34. Device as claimed in claim 32 or 33, characterized in that at least one spring is unstressed in the position of rest.

35. Device as claimed in one of claims 11 to 34, characterized in that at least one lever arm and the associated spring are arranged so that the effective length of the lever arm passes through a maximum during the pivoting movement.

36. Device as claimed in one of the preceding claims, characterized in that the springs are subjected to pressure alone.

37. Device as claimed in one of claims 1 to 35, characterized in that the springs are subjected to tension alone.

**Revendications**

1. Dispositif de compensation des moments de rotation qui apparaissent lors du basculement d'un corps (6) qui peut pivoter autour d'un axe de pivotement fixe (5), comportant une partie fixe (4) et une partie pivotante (6) qui constitue ou qui reçoit le corps; étant précisé que la partie fixe (4) et la partie pivotante (6) sont liées, avec possibilité de pivotement relatif, par l'intermédiaire de l'axe fixe de picotement (5) et qu'au moins un ressort (23, 24) agissant entre la partie fixe (4) et la partie pivotante (6) exerce une force de rappel opposée au moment de rotation, en particulier tête pivotante (2) pour caméras (11) et luminaires, caractérisé en ce que la transmission du moment de rotation sur au moins un ressort (23, 24) se fait par l'intermédiaire d'au moins un bras de levier dont la longueur efficace ($b_1$, $b_2$, $b_3$) et/ou sa composante de coulissement efficace dans la direction de la déformation élastique du ressort (23, 24), lors d'un pivotement de la partie pivotante (6) par rapport à la partie fixe (4), varie ou varient avec le moment de pivotement et dans le même sens.

2. Dispositif selon la revendication 1, caractérisé en ce que les ressorts, dont il y a au moins un (23, 24), présentent une caractéristique linéaire.

3. Dispositif selon la revendication 1 ou la revendication 2, caractérisé en ce qu'en ce qui concerne le ressort, dont il y a au moins un (23, 24), la direction de déformation élastique est rectiligne.

4. Dispositif selon l'une quelconque des revendications précédentes, caractérisé en ce que la longueur efficace ($b_1$, $b_2$, $b_3$) des bras de levier et/ou leur composante de coulissement efficace dans la direction de déformation élastique du ressort correspondant varient, lors d'un pivotement de la partie pivotante (6) par rapport à la partie fixe (4) de façon telle que le moment de rappel varie avec le sinus de l'angle de pivotement ($\alpha$).

5. Dispositif selon l'une quelconque des revendications précédentes, caractérisé en ce qu'il est prévu au moins un ressort et au moins un bras de levier pour un mouvement de pivotement sens horaire et au moins un ressort et au moins un bras de levier pour un mouvement de pivotement sens antihoraire.

6. Dispositif selon l'une quelconque des revendications précédentes, caractérisé par un mécanisme de réglage pour la mise au point des longueurs efficaces de levier en fonction du poids et de la position du centre de gravité du corps.

7. Dispositif selon l'ensemble des revendications 5 et 6, caractérisé par respectivement un mécanisme de réglage distinct pour le bras de levier, dont il y a au moins un, efficace lors d'un mouvement de pivotement sens horaire et pour le bras de levier, dont il y a au moins un, efficace lors d'un mouvement de pivotement sens antihoraire.

8. Dispositif selon la revendication 7, caractérisé en ce que les deux mécanismes de réglage peuvent se manoeuvrer ensemble.

9. Dispositif selon la revendication 7, caractérisé en ce que les deux mécanismes de réglage peuvent se manoeuvrer séparément.

10. Dispositif selon l'une quelconque des revendications précédentes, caractérisé par un dispositif de réglage sur la partie pivotante permettant de déplacer perpendiculairement à l'axe de pivotement le centre de gravité d'un corps fixé sur cette partie pivotante.

11. Dispositif selon l'une quelconque des revendications précédentes, caractérisé en ce que la partie pivotante s'appuie sur la partie fixe par au moins un point d'appui qui, pendant le mouvement de pivotement, se déplace sur une surface frontale du ressort, tout en comprimant ou en déchargeant le ressort.

12. Dispositif selon la revendication 11, caractérisé en ce que la partie pivotante s'appuie sur la partie fixe par l'intermédiaire d'une surface de came, le long de laquelle le point d'appui se déplace pendant le mouvement de pivotement.

13. Dispositif selon la revendication 12, caractérisé en ce que la surface frontale du ressort est conçue en forme de came.

14. Dispositif selon la revendication 11 ou la revendication 12, caractérisé en ce que la surface frontale court perpendiculairement à la direction de déformation élastique du ressort et/ou est plane.

15. Dispositif selon l'une quelconque des revendications 11 à 14, caractérisé en ce que l'axe de déformation élastique du ressort, dont il y a au moins un, court perpendiculairement à l'axe de pivotement et à une certaine distance radiale de cet axe.

16. Dispositif selon la revendication 15, caractérisé en ce que la direction de déformation élastique du ressort court verticalement lorsque le dispositif prend sa position normale de travail.

17. Dispositif selon l'une quelconque des revendications 11 à 16 caractérisé en ce que les ressorts actifs dans une direction de pivotement sont disposés le long d'une droite courant parallèlement à l'axe de pivotement et à une certaine distance de cet axe.

18. Dispositif selon l'une quelconque des revendications précédentes, caractérisé en ce que la partie pivotante est guidée entre deux zones, en forme de joues liées par l'axe de pivotement, de la partie fixe.

19. Dispositif selon la revendication 18, caractérisé en ce que les ressorts sont logés dans la partie fixe.

20. Dispositif selon l'une quelconque des revendications 1 à 18, caractérisé en ce que les ressorts sont logés dans la partie pivotante.

21. Dispositif selon la revendication 20, caractérisé en ce que le mécanisme de réglage, dont il y a au moins un, est logé dans l'une des zones en forme de joue.

22. Dispositif selon l'une quelconque des revendications précédentes, caractérisé en ce que les ressorts comprennent des ressorts hélicoïdaux logés dans des canaux cylindriques.

23. Dispositif selon la revendication 22, caractérisé en ce que les canaux cylindriques comportent, au moins du côté tourné vers la surface frontale des ressorts, une fente latérale et/ou au moins à l'une de leurs extrémités un élément amortisseur.

24. Dispositif selon l'une quelconque des revendications 22 ou 23, caractérisé en ce que dans les ressorts hélicoïdaux · sont insérées des broches de guidage dont la surface libre constitue la surface frontale, conçue en forme de came ou plane, pour l'attaque du point d'appui.

25. Dispositif selon l'une quelconque des revendications précédentes, caractérisé par au moins un élément amortisseur entre la partie fixe et la partie pivotante.

26. Dispositif selon l'une quelconque des revendications 22 à 25, caractérisé en ce que la surface frontale conçue sous forme de came ou plane est en liaison active, par l'intermédiaire d'un élément amortisseur, avec le ressort respectif.

27. Dispositif selon l'une quelconque des revendications précédentes, caractérisé en ce que le point d'appui, dont il y a au moins un, est constitué par l'extrémité libre d'un galet ou d'une broche qui vient en saillie depuis la partie pivotante ou la partie fixe.

28. Dispositif selon la revendication 27, caractérisé en ce que la broche est conçue comme came.

29. Dispositif selon l'une quelconque des revendications 27 ou 28, caractérisé en ce que la broche ou le galet se détachent latéralement de la partie pivotante ou de la partie fixe parallèlement à l'axe de pivotement et à une certaine distance de cet axe.

30. Dispositif selon l'une quelconque des revendications 27 à 29, caractérisé en ce que le mécanisme de réglage contient une vis de réglage qui fait coulisser la broche ou le galet le long d'une courbe prescrite, perpendiculairement à l'axe de pivotement.

31. Dispositif selon la revendication 29, caractérisé en ce que la broche ou le galet sont fixés dans un bloc de guidage qui peut coulisser le long d'un alésage cylindrique et en ce que la vis de réglage est en liaison active avec le bloc de guidage par l'intermédiaire d'un taraudage.

32. Dispositif selon l'une quelconque des revendications 1 à 19 et 21 à 31, caractérisé en ce que l'angle $\beta$ défini par, d'une part le vecteur radial qui joint l'axe de pivotement au point d'appui de la partie pivotante sur la surface frontale du ressort et par, d'autre part, une surface courant perpendiculairement à la direction de déformation élastique du ressort, a une valeur située entre environ 10 à environ 80°, de préférence 15 à 45°, lorsque le dispositif prend sa position de repos par rapport au déplacement de pivotement.

33. Dispositif selon la revendication 32, caractérisé en ce que l'angle a une valeur d'environ 36°.

34. Dispositif selon l'une quelconque des revendications 32 ou 33, caractérisé en ce que le ressort, dont il y a au moins un, est détendu en position de repos.

35. Dispositif selon l'une quelconque des revendications 11 à 34, caractérisé en ce que le bras de levier, dont il y a au moins un, et le ressort correspondant sont disposés de façon que la longueur active du bras de levier passe par un maximum pendant le déplacement de pivotement.

36. Dispositif selon l'une quelconque des revendications précédentes, caractérisé en ce que les ressorts sont uniquement sollicités en compression.

37. Dispositif selon l'une quelconque des revendications 1 à 35, caractérisé en ce que les ressorts sont uniquement sollicités en traction.

Fig. 1

0 031 595

Fig. 2

Fig. 3

Fig. 4

15

Fig. 5a

Fig. 5b

Fig. 6a

Fig. 6b

**Fig. 7**

*Fig. 8*

Fig. 9

Fig. 10

**Fig. 11**